# EUROPEAN PATENT APPLICATION

(11) **EP 3 660 832 A1**
(43) Date of publication of application: **03.06.2020**
(21) Application number: 19211076.5
(22) Date of filing: 22.11.2019
(51) Int. Cl.: G10G 1/02, G09B 15/02, G10H 1/00

(54) **KEYBOARD INSTRUMENT**

(30) Priority: 29.11.2018 CN 201811450939
(71) Applicant: Zhou, Jianxun, Quanshan District Xuzhou Jiangsu 221000 (CN)
(72) Inventor: Zhou, Jianxun, Quanshan District Xuzhou Jiangsu 221000 (CN)
(74) Representative: Spittle, Mark Charles

(57) **Abstract**

A keyboard instrument is disclosed. The keyboard instrument comprising: a white key and a black key, respectively marked with a pitch symbol corresponding to a number representing a pitch in a numbered musical notation system, wherein the pitch symbol marked on the white key is displayed in a first form and the pitch symbol marked on the white key is displayed in a second form.

## Description

### TECHNICAL FIELD

The present application generally relates to a musical instrument, and in particular to a keyboard instrument.

### BACKGROUND ART

Piano, as a basic teaching tool in the musical culture art, plays an irreplaceable role in teaching musical theory, vocal music and instrumental music. However, the piano, as first one of Top Three world instruments, makes ordinary people always look and sigh because of its price and learning difficulty. As economy develops rapidly, the piano is no longer a luxury commodity; especially, currently an inexpensive electronic piano can also meet needs of music lovers with features of a small footprint, adjustable volume and no need for tuning, thus are widely used in music theory, solfeggio and other special music teaching. Accordingly, broad masses are learning piano and other keyboard instruments more and more actively and passionately so as to enrich their own cultural life. It is no need to deny that a traditional piano teaching system is scientific and practical, and has trained a large number of pianists and performers. However, a beginner just getting involved in music is still deterred by a complex stave music theory the traditional piano teaching system relies on. Therefore, how to make a music beginner easier to get into a path of playing the piano becomes a valuable question.

### SUMMARY OF THE INVENTION

In view of the above in the art, the present application is dedicated to provide a keyboard instrument capable of making a music beginner easy to locate a key of a keyboard instrument according to a music score, thereby easily starting a practice of playing the keyboard instrument, which greatly lowers a threshold of playing the keyboard instrument.

For this purpose, the present application proposes a keyboard instrument, comprising: a white key and a black key, respectively marked with a pitch symbol corresponding to a number representing a pitch in a numbered musical notation system, wherein the pitch symbol marked on the white key is displayed in a first form and the pitch symbol marked on the white key is displayed in a second form.

In an example, the pitch symbol marked on the white key comprises a number from 1, 2, 3, 4, 5, 6, 7, and the pitch symbol marked on a black key comprises a number from 1, 2, 3, 4, 5.

In an example, the pitch symbol further comprises a tag over or under the number, respectively representing an octave higher or lower in pitch in the numbered musical notation system.

In an example, the tag comprises at least one of a dot, a caret, or a pre-defined mark.

In an example, the pitch symbol comprises the number without any tag, representing an absolute high in pitch of a note in one-line octave of a keyboard instrument.

In an example, the first form comprises a form of black character and white background, and the second form comprises at least one of a reverse display form of white character and white background, a number in a circle, or any other pre-defined form differing from the first form.

In an example, the marking on the white key and the black key is invisible in a normal state.

In an example, the marking on the white key and the black key is visible by wearing glasses or under a predetermined lighting condition.

In an example, the marking on the white key and the black key comprises marking in Braille.

With the keyboard instrument proposed in the present application, a music beginner can easily locate a key of a keyboard instrument according to a music score, thereby easily starting playing the keyboard instrument, which greatly lowers a threshold of playing the keyboard instrument.

### BRIEF DESCRIPTION OF THE DRAWINGS

These and/or other aspects and advantages of the present application will become apparent and easy to understand from following detailed descriptions of embodiments of the present application in combination with the accompanying drawings, in which:
Fig. 1 is a schematic view of a structure of a musical notation system according to an embodiment of the present application;
Fig. 2 is a schematic view of a keyboard of a keyboard instrument according to an embodiment of the present application;
Fig. 3 is a schematic view of correspondence between a legacy numbered musical notation and a musical notation system according to an embodiment of the present application;
Fig. 4 is a schematic view of a keyboard of a keyboard instrument according to an embodiment of the present application;
Fig. 5 is a schematic view of a structure of a musical notation system according to another embodiment of the present application.

### DETAILED DESCRIPTIONS OF THE EMBODIMENTS

Hereinafter, exemplary embodiments of the present application will be described in detail with reference to the accompanying drawings. It is apparent that the described embodiments are only part but not all of the embodiments of the present application. It should be understood that the present application is not limited to the exemplary embodiments described here.

It is well known that a legacy numbered musical notation system is easy for a beginner just getting involved in music to understand and start learning music theory. However, notes in the numbered musical notation merely reflect relative pitch and are not easy to be mapped to keys on a piano keyboard, resulting in difficulty to find the keys on the piano keyboard with reference to a score in the numbered musical notation; thus, it is quite hard to play piano by using the numbered musical notation. In addition, white keys and black keys on the piano keyboard are not reflected at all in the numbered musical notation, causing further difficulty to play piano by using the numbered musical notation.

A keyboard instrument proposed in the present application, based on a musical notation system proposed in the present application, makes improvement on the legacy numbered musical notation system, where white keys and black keys on the piano keyboard are reflected respectively in the musical notation so that a pitch symbol in a music score is directly mapped to a key on the piano keyboard. Correspondingly, in the keyboard instrument of the present application, a white key and a black key are respectively marked with a pitch symbol, in a first form for the white key and a second form for the black key, corresponding to a number representing a pitch in a numbered musical notation system, and used with the musical notation system of the present application. Thus, with the keyboard instrument and the musical notation system of the present application, keys on the keyboard can be located rapidly so that it becomes quite simply and easy to play the keyboard instrument by following a score, which greatly lowers a threshold of playing the keyboard instrument.

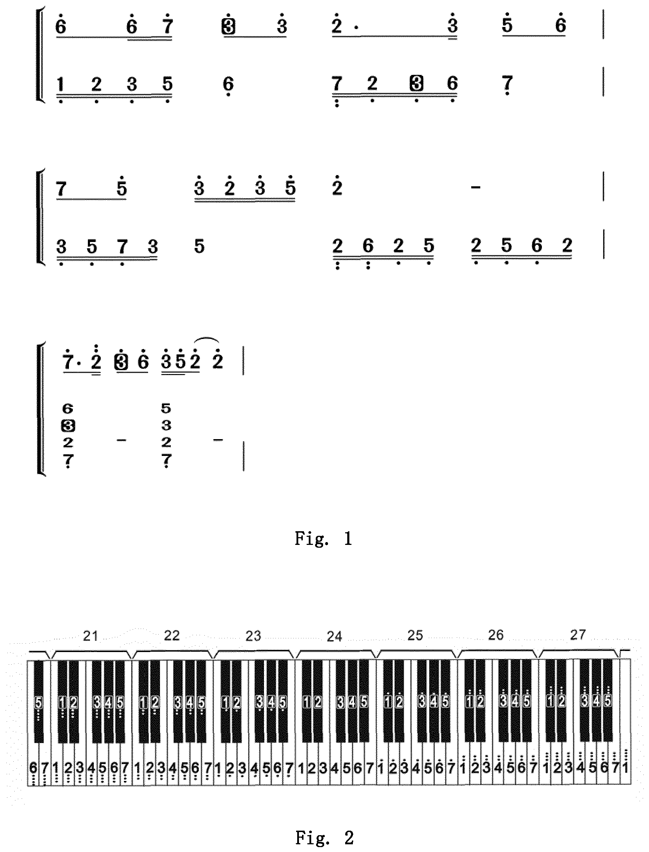

Fig. 1 is a schematic view of a structure of a musical notation system according to an embodiment of the present application.

As shown in Fig. 1, the musical notation system according to an embodiment of the present application includes a pitch symbol and a duration symbol. Compared with the legacy numbered musical notation system, the musical notation system according to an embodiment of the present application makes improvement on the pitch symbol to represent directly a key on the piano keyboard with the pitch symbol corresponding to a number representing a pitch in the numbered musical notation system. As shown in Fig. 1, a number can be used to represent a pitch, just like 1, 2, 3, 4, 5, 6, 7 used in the numbered musical notation system. However, the pitch symbols representing a white key and a black key of the piano keyboard in Fig. 1 are shown respectively in different forms: in Fig. 1, the number mapped to the white key is shown in a normal form (black character on white background), while the number mapped to the black key is shown in a reverse display form (white character on black background), and optional display forms further include a number in a circle, for example, ②.

In the musical notation system according to an embodiment of the present application, the duration symbol, that is, the symbol representing a duration of a note, can adopt the representation form in the numbered musical notation system.

Fig. 2 is a schematic view of a keyboard of a keyboard instrument according to an embodiment of the present application.

As shown in Fig. 2, a piano keyboard consists of 52 white keys and 36 black keys, including 7 groups of sub-keyboards in addition to leftmost 3 keys and one rightmost key, where each group of sub-keyboard consists of 7 white keys (expressed as C, D, E, F, G, A, B) and 5 black keys (expressed as ^{#}C, ^{#}D, ^{#}F, ^{#}G, ^{#}A), and corresponding keys in neighboring groups of sub-keyboards differ octave in pitch. The 7 groups of sub-keyboards are successively from low to high in pitch: contra octave 21, great octave 22, small octave 23, one-line octave 24, two-line octave 25, three-line octave 26 and four-line octave 27. The leftmost 3 keys and one rightmost key belong to sub-contra octave and five-line octave respectively. It is known in the art that the above arrangement of the piano keyboard is equivalently applicable to that of other keyboard instruments; therefore, Fig. 2 shows correspondence between a keyboard of the keyboard instrument and pitch symbols in the musical notation system according to an embodiment of the present application. As shown in Fig. 2, in the keyboard instrument according to an embodiment of the present application, by marking on the keyboard of the keyboard instrument the corresponding pitch symbols in musical notation system according to according to an embodiment of the present application, enabling the musical notation system of the present application to be used intuitively and easily with the keyboard instrument of the present application; so it also becomes quite simple and easy for a beginner to play piano by following a score, which greatly lowers a threshold of playing the keyboard instrument.

As shown in Fig. 2, in each group of sub-keyboard in the musical notation system according to an embodiment of the present application, the 7 white keys can be represented by 1, 2, 3, 4, 5, 6, 7 (solfège: do, re, mi, fa, sol, la, si) and the 5 black keys can be represented by 1, 2, 3, 4, 5, with the white keys and black keys marked in different forms (preferably, which can be clearly distinguished). The different groups of sub-keyboards can be represented by adding a dot over or under the number where a dot over the number is added to represent an octave higher in pitch and a dot under the number is added to represent an octave lower in pitch, and the number without any dot represents an absolute high in pitch of a note in the one-line octave 24 of the piano keyboard.

In one embodiment, the pitch symbol in the musical notation system according to an embodiment of the present application can also adopt a letter like C, D, E, F, G, A, or B expressing a pitch name.

In another embodiment, the pitch symbol in the musical notation system according to an embodiment of the present application can adopt a tag other than the dot (for example, ^) to represent the octave change in pitch.

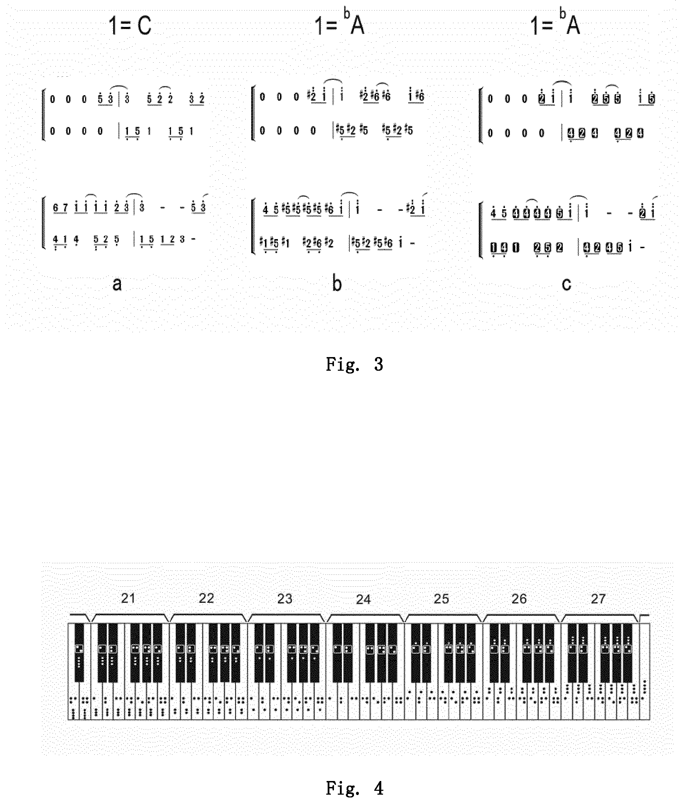

Fig. 3 is a schematic view of correspondence between a legacy numbered musical notation and a musical notation system according to an embodiment of the present application.

As shown in Fig. 3, a score a is a normal score in the numbered musical notation, recorded by using a movable do solfège manner, looks concise and is easy to sing by following the score visually, but it does not clearly correspond to an original key (see below) and is hard to be followed by playing piano. A score b adopts the original key (1=^{b}A), is recorded by using a fixed do solfège manner, and there are many sharp notes in the score b though actual pitches are reflected so that it is hard to sing by following the score visually and is still hard to be followed by playing piano. A score c applies the musical notation system according to an embodiment of the present application and corresponds to the score b while the pitch symbols in the score c directly represent the white keys and black keys of the piano keyboard respectively with the sharp notes changed to the numbers corresponding to the black keys as shown in Fig. 2, which is easy to be followed by playing piano.

Therefore, with the musical notation system according to the present embodiment, a music beginner can easily locate keys on a keyboard of a keyboard instrument according to the score; when using the keyboard instrument according to an embodiment of the present application, it is thereby easy to start playing the keyboard instrument, which greatly lowers a threshold of playing the keyboard instrument. Especially for those knowing a little about the numbered musical notation system, it is quite easy to grasp the musical notation system according to the present embodiment and play the keyboard instrument.

In one embodiment, the marks on the white keys and black keys in the keyboard instrument are invisible in a normal state, that is, as a conventional keyboard instrument. In this embodiment, the marks on the white keys and black keys can be seen by wearing glasses or under a specific lighting condition, obtaining convenience of using the keyboard instrument of the present application. For example, the above marks are made with a specific fluorescent material, which is difficult to clearly recognize under a normal lighting condition; and under the corresponding specific lighting condition, such as under blue illumination, or through filters of specific glasses, the fluorescent marks can be clearly identified. Apparently, the above examples are non-restrictive and other implementations can be found by one of ordinary skill in the art.

Fig. 4 is a schematic view of a keyboard of a keyboard instrument according to an embodiment of the present application.

As shown in Fig. 4, a pitch symbol in the musical notation system according to an embodiment of the present application is marked in Braille on a keyboard of a keyboard instrument. Compared with Fig. 2, the mark on the keyboard of a keyboard instrument of the present application as shown in Fig. 4 still corresponds to the pitch symbol in the musical notation system of the present application, except that the mark is completed in Braille, that is, marked in Braille on the keyboard are contra octave 21, great octave 22, small octave 23, one-line octave 24, two-line octave 25, three-line octave 26 and four-line octave 27 (The leftmost 3 keys and one rightmost key belong to sub-contra octave and five-line octave respectively), and the white key and black key are marked in different forms. Therefore, a blind can recognize each key accurately by touching and identifying the Braille marks on the keyboard of the keyboard instrument, making it easy for the blind to play the keyboard instrument. When using a Braille score in the musical notation system according to the present application, it can become easier for the blind to play the keyboard instrument.

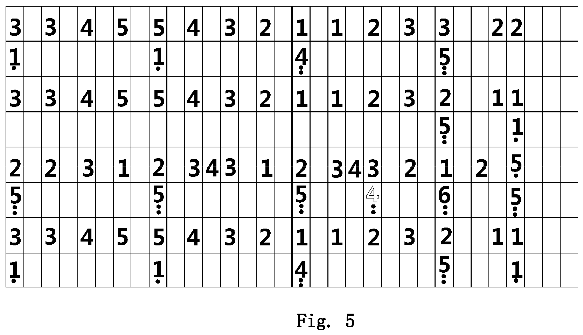

Fig. 5 is a schematic view of a structure of a musical notation system according to another embodiment of the present application.

Likewise, the musical notation system according to another embodiment of the present application also uses the pitch symbol to directly represent the piano keyboard (or a keyboard of a keyboard instrument), corresponding to a number representing a pitch in the numbered musical notation system. As shown in Fig. 5, a number can be used to represent a pitch, just like 1, 2, 3, 4, 5, 6, 7 used in the numbered musical notation system. However, the pitch symbols representing a white key and a black key of the piano keyboard in Fig. 5 are shown respectively in different forms: in Fig. 5, the number mapped to the white key is shown in a normal form (black character on white background), while the number mapped to the black key is shown in a reverse display form (white character on black background), and optional display forms further include a hollow number such as 4 in Fig. 5.

Likewise, as shown in Fig. 2, in each group of sub-keyboard in the musical notation system according to another embodiment of the present application, the 7 white keys can be represented by 1, 2, 3, 4, 5, 6, 7 (solfège: do, re, mi, fa, sol, la, si) and the 5 black keys can be represented by 1, 2, 3, 4, 5. The different groups of sub-keyboards can be represented by adding a dot over or under the number where a dot over the number is added to represent an octave higher in pitch and a dot under the number is added to represent an octave lower in pitch, and the number without any dot represents an absolute high of a note in the one-line octave 24 of the piano keyboard.

Furthermore, in the musical notation system according to another embodiment of the present application, the pitch symbol within a grid represents a note with the pitch having a minimum fixed duration, and one or more continuous blank grids just after the grid with the pitch symbol represent the pitch continuing the duration represented by the blank grids. For example, starting the score as shown in Fig. 5, a blank grid just after a grid embracing a starting pitch 3 and before a grid embracing another pitch 3, represents the note 3 (the key E in the one-line octave of the piano keyboard) with a duration represented by two grids (one beat), followed by another note 3. Thus, when playing a keyboard instrument, the key E in the one-line octave of the keyboard is pressed for one beat duration; and it is intuitive and very easy to play a keyboard instrument by following such score visually.

In one embodiment, the pitch symbol in the musical notation system according to another embodiment of the present application can also adopt a letter like C, D, E, F, G, A, or B expressing a pitch name.

In another embodiment, the pitch symbol in the musical notation system according to another embodiment of the present application can adopt a tag other than the dot (for example, ^) to represent the octave change in pitch.

Therefore, with the musical notation system according to the present embodiment, a music beginner knowing nothing about the numbered musical notation system can easily locate keys on a keyboard of a keyboard instrument according to the score, and when using the keyboard instrument of the present application, can easily and intuitively start playing the keyboard instrument, thereby it becomes quite simply and easy to play the keyboard instrument, especially piano, by following a score, which greatly lowers a threshold of playing the keyboard instrument. For those beginners knowing nothing about the numbered musical notation system, it is quite easy to grasp the musical notation system according to the present embodiment, making it easier to start playing piano.

The embodiments of the present application have been described above. The above descriptions are exemplary but not exhaustive, and the present application is not limited to the embodiments disclosed. Various modifications and alterations are obvious to a person of ordinary skill in the art without departing from the spirit and scope of the described embodiments. Therefore, the protection scope of the present application shall be defined by the appended claims.

## Claims

1. A keyboard instrument, comprising:
a white key and a black key, respectively marked with a pitch symbol corresponding to a number representing a pitch in a numbered musical notation system,
wherein the pitch symbol marked on the white key is displayed in a first form and the pitch symbol marked on the white key is displayed in a second form.

2. The keyboard instrument of claim 1, wherein:
the pitch symbol marked on the white key comprises a number from 1, 2, 3, 4, 5, 6, 7, and the pitch symbol marked on a black key comprises a number from 1, 2, 3, 4, 5.

3. The keyboard instrument of claim 2, wherein:
the pitch symbol further comprises a tag over or under the number, respectively representing an octave higher or lower in pitch in the numbered musical notation system.

4. The keyboard instrument of claim 3, wherein:
the tag comprises at least one of a dot, a caret, or a pre-defined mark.

5. The keyboard instrument of claim 4, wherein:
the pitch symbol comprises the number without any tag, representing an absolute high in pitch of a note in one-line octave of a keyboard instrument.

6. The keyboard instrument of claim 1, wherein:
the first form comprises a form of black character and white background, and the second form comprises at least one of a reverse display form of white character and white background, a number in a circle, or any other pre-defined form differing from the first form.

7. The keyboard instrument of claim 1, wherein:
the marking on the white key and the black key is invisible in a normal state.

8. The keyboard instrument system of claim 7, wherein:
the marking on the white key and the black key is visible by wearing glasses or under a predetermined lighting condition.

9. The keyboard instrument of claim 1, wherein:
the marking on the white key and the black key comprises marking in Braille.
